# EUROPÄISCHE PATENTSCHRIFT

(11) **EP 3 019 387 B1**
(45) Veröffentlichungstag und Bekanntmachung des Hinweises auf die Patenterteilung: **23.05.2018**
(21) Anmeldenummer: 14739042.1
(22) Anmeldetag: 09.07.2014
(51) Int. Cl.: B62D 5/09, B62D 5/30

(54) **ELEKTROHYDRAULISCHES LENKSYSTEM**
ELECTROHYDRAULIC STEERING SYSTEM
SYSTÈME DE DIRECTION ÉLECTROHYDRAULIQUE

(30) Priorität: 09.07.2013 DE 102013011484; 30.10.2013 DE 102013018237
(43) Veröffentlichungstag der Anmeldung: 18.05.2016
(73) Patentinhaber: Liebherr-Werk Bischofshofen GmbH, 5500 Bischofshofen (AT)
(72) Erfinder: KIEGERL, Christoph, 5453 Werfenweng (AT); KNAPP, Hans, A-5500 Bischofshofen (AT); BÖS, Manuel, A-5400 Hallein (AT); STOCK, Josef, A-5500 Bischofshofen (AT)
(74) Vertreter: Herrmann, Uwe
(86) Internationale Anmeldenummer: PCT/EP2014/001878
(87) Internationale Veröffentlichungsnummer: WO 2015/003803

(56) Entgegenhaltungen:
- EP-A1- 2 113 445
- EP-A2- 1 894 813
- EP-A2- 1 914 150

## Beschreibung

Die vorliegende Erfindung betrifft ein elektrohydraulisches Lenksystem, insbesondere für mobile Arbeitsmaschinen und insbesondere für Radlader.

Aufgrund des vorhandenen Gefahrenpotentials besteht insbesondere für die Lenkung in Baumaschinen die Notwendigkeit, die Funktionstüchtigkeit der Lenkanlage zu jedem Zeitpunkt sicherstellen zu können. Diese Forderung betrifft sämtliche Bauteile, die in der Steuerungskette der Lenkanlage wirken, unabhängig von der Art der angewandten Technik, was bedeutet, dass die Funktionstüchtigkeit bei einer Baumaschinenlenkanlage für mechanische, elektrische und hydraulische Bauteile sicherzustellen ist.

Bei einer Vielzahl von Maschinenfunktionen kann es ausreichend sein, einen Fehler zu erkennen und die Funktion stillzusetzen, indem die Funktion komplett ausgeschaltet wird. Eine solche Vorgehensweise ist bei einer Lenkung ausgeschlossen, da das Ausschalten des Lenksystems nicht als sicherer Zustand bewertet werden kann. Vielmehr muss ein Lenksystem dazu in der Lage sein, einen sicheren Zustand einzunehmen. Das Fahrzeug muss zum Stillstand gebracht werden können, wobei die Lenkbarkeit jedenfalls bis zum Erreichen des Stillstandes gewährleistet sein muss. Die Funktionstüchtigkeit des Lenksystems muss somit auch im Fehlerfall gegeben sein.
Aus dem Stand der Technik gemäß der DE 11 2006 000 783 T5 ist ein Lenksystem bekannt, bei dem die Versorgung der Lenkzylinder über ein einzelnes Hauptventil in Schieberausführung erfolgt. Die Vorsteuerung dieses Hauptventils erfolgt durch elektrisch proportionale Druckreduzierventile. Der Vorsteuerkreis ist redundant ausgeführt. Als Vorteil wird der Entfall eines der Hauptventile beschrieben. Kommt es zu einem Fehlerfall im Vorsteuerkreis, z.B. in den elektrohydraulischen Ventilen des Vorsteuerkreises, kann die Funktionstüchtigkeit der Vorsteuerung durch die doppelte Ausführung der Vorsteuerventile weiterhin aufrecht erhalten werden. Die Maschine bleibt uneingeschränkt lenkfähig.
Ein Nachteil bei diesem bekannten Lenksystem besteht in der einfachen Ausführung des Hauptventils. Bleibt dieses Ventil ungewollt z.B. in geöffneter Position stehen, beispielsweise weil der Kolben des Ventils nicht mehr bewegbar ist, wird das Gerät trotz der Redundanz der Vorsteuerung unlenkbar.
Aus dem Stand der Technik gemäß der EP 1 914 150 A2 ist es weiterhin bekannt, ein elektrohydraulisches Lenksystem bereitzustellen, bei dem zwei Hauptventile vorgesehen sind, auf die im Normalbetrieb die Ölmenge aufgeteilt wird. Des Weiteren ist eine elektrische Doppelbestückung von elektrischen Steuergeräten vorgesehen. Sowohl der hydraulisch relevante als auch der elektrische/elektronische Teil des Lenksystems sind redundant ausgeführt, wodurch eine uneingeschränkte Funktionsfähigkeit erhalten bleibt, allerdings verbunden mit dem Nachteil entsprechend hoher Herstellkosten,
Dokument EP 1 894 813 A2 offenbart die technischen Merkmale des Oberbegriffs des Anspruchs 1. Der vorliegenden Erfindung liegt daher die Aufgabe zugrunde, ein elektrohydraulisches Lenksystem der eingangs genannten Art dahingehend weiterzubilden, dass dessen Herstellkosten gegenüber bekannten Systemen mit vollständig redundanten Systemen verringert ist und gleichwohl im Fehlerfall die Lenkbarkeit gewährleistet bleibt.

Diese Aufgabe wird durch ein elektrohydraulisches Lenksystem mit den Merkmalen das Anspruchs 1 gelöst. Danach ist vorgesehen, dass das System wenigstens eine Steuerung aufweist, die wenigstens einen hydraulischen Zweig umfasst, der wenigstens einen hydraulischen Primärkreis und wenigstens einen hydraulischen Sekundärkreis aufweist, wobei der hydraulische Primärkreis wenigstens ein Hauptventil zur hydraulischen Ansteuerung der Lenkanlage umfasst und wobei der hydraulische Sekundärkreis wenigstens ein Notventil zur hydraulischen Ansteuerung der Lenkanlage im Notbetrieb umfasst, wobei das Notventil kleiner ausgebildet ist als das Hauptventil.

Durch das elektrohydraulische Lenksystem wird die Funktionstüchtigkeit der Lenkung auch im Fehlerfall gewährleistet, wenn auch mit geschmälerten Bedien- und Komforteigenschaften, was angesichts der Tatsache, dass die Notlenkung nur in Ausnahmefällen zum Einsatz kommt, tolerierbar ist.

Durch das vorzugsweise deutlich kleiner als das Hauptventil ausgeführte Notventil wird erreicht, dass sich der Aufbau eines elektrohydraulischen Lenksystems deutlich vereinfachen lässt, ohne die Funktionstüchtigkeit zu schmälern. Diese ist im Notbetrieb durch das Notventil gesichert.

Vorzugsweise ist vorgesehen, dass im Normalbetrieb, wenn also keine Funktionsstörung des Lenksystems vorliegt, die gesamte von einer oder mehreren Pumpen geförderte Ölmenge über das Hauptventil zu dem oder den Lenkzylindern der Lenkanlage strömt. Weiterhin ist vorzugsweise vorgesehen, dass bei Vorliegen einer Funktionsstörung des Lenksystems die gesamte von einer oder mehreren Pumpen geförderte Ölmenge über das Notventil zu dem oder den Lenkzylindern der Lenkanlage strömt, d.h. das Hauptventil "abgeschaltet" wird. Des Weiteren ist das elektrohydraulische Lenksystem, insbesondere für mobile Arbeitsmaschinen, insbesondere Radlader, mit wenigstens einer Steuerung ausgestattet, die wenigstens einen elektrischen Zweig umfasst, der wenigstens einen elektrischen Primärkreis und wenigstens einen elektrischen Sekundärkreis umfasst, wobei wenigstens ein Fahrzeugleitrechner oder dergleichen vorgesehen ist, der den elektrischen Primärkreis steuert, und wobei wenigstens zwei Endstufen vorgesehen sind, die den elektrischen Sekundärkreis steuern und die nicht durch den Fahrzeugleitrechner, sondern vorzugsweise direkt durch die Lenkeinrichtung des Lenksystems gesteuert werden.
Somit kann alternativ oder zusätzlich zu der wenigstens zweikreisigen hydraulischen Ausführung auch der elektrische Zweig der Steuerung zwei- oder mehrkreisig ausgeführt sein, was beispielsweise dann vorteilhaft ist, wenn der Fahrzeugleitrechner ausfällt, der das Hauptventil ansteuert. In diesem Fall kann die Steuerung über den elektrischen Sekundärkreis erfolgen.
Auch eine Kombination ist denkbar, d.h. ein elektrohydraulisches Lenksystem, bei dem sowohl der hydraulische Zweig als auch der elektrische Zweig redundant ausgeführt ist.
An dieser Stelle wird darauf hingewiesen, dass der Begriff "steuern" und "Steuerung" im Rahmen der vorliegenden Erfindung sowohl eine Steuerung als auch eine Regelung umfasst und dass der Begriff "elektrisch", "Elektrik", "elektronisch" und "Elektronik" jeweils das Gebiet der Elektrik und/oder das Gebiet der Elektronik betrifft. Gemäß der Erfindung ist wenigstens ein Ventil vorgesehen, dass derart angeordnet ist, dass es im Notbetrieb das Notventil mit Steuerdruck versorgt und ein oder mehrere Absperrventile schließt, die sich zwischen dem Hauptventil und der Lenkanlage befinden, wobei vorgesehen ist, dass das Ventil stromlos offen ist. Im Fehlerfall wird dieses Ventil geöffnet. Je nach Ausführung des Notventils kann dieses dadurch angesteuert werden.

Die Öffnung des genannten Ventils hat vorzugsweise ein Schließen eines oder mehrerer Absperrventile zur Folge, die das Hauptventil von dem oder den Lenkzylindern trennen. Vorzugsweise ist genau ein derartiges Absperrventil, z. B. ein 4/2-Wege Sperrventil vorgesehen.
Denkbar ist es weiterhin, dass der elektrische Sekundärkreis über wenigstens zwei proportionale Endstufen verfügt, deren vorzugsweise pulsweitenmodulierte Signale direkt durch die Lenkeinrichtung (Joystick, Lenkrad etc.) gesteuert werden. Denkbar ist es, dass die Elektronik über Endstufen proportional zu einer Auslenkung in Form von pulsweitenmodulierten Leistungsausgängen ausgibt, um die Proportional-Druckreduzierventile des Notventils zu steuern oder dieses elektrisch direkt zu betätigen.
Das genannte Notventil kann mit Lagerückmeldung ausgeführt sein.
Es ist im hydraulischen Sekundärkreis der Lenkanlage angeordnet und kann entweder elektrohydraulisch vorgesteuert oder elektrisch direkt betätigt werden.

In weiterer Ausgestaltung der Erfindung sind wenigstens eine Hauptlenkpumpe und/oder wenigstens eine Notlenkpumpe vorgesehen, die zur hydraulischen Versorgung des hydraulischen Primärkreises und/oder des hydraulischen Sekundärkreises dienen, wobei vorzugsweise vorgesehen ist, dass der Steuerdruck für Primär- und Sekundärkreis über ein Druckminderventil versorgt wird, welches durch Haupt- und Notlenkpumpe gespeist werden kann.

Weiterhin kann wenigstens ein hydraulischer Speicher im Vorsteuerkreis des hydraulischen Primär- oder Sekundärkreises vorgesehen sein, wobei vorzugsweise vorgesehen ist, dass der hydraulische Speicher derart angeordnet ist, dass er vor dem Starten des Motors, vorzugsweise des Dieselmotors, der mobilen Arbeitsmaschine durch eine wenigstens Pumpe, vorzugsweise durch eine elektrische Notlenkpumpe gefüllt wird. Dadurch kann bei stehendem Dieselmotor überprüft werden, ob die im Notbetrieb aktiven Teile ordnungsgemäß arbeiten und zwar bevor der Maschinenführer den Motor startet und das elektrohydraulische Lenksystem in Betrieb nimmt.

In einer Ausführungsform ist im hydraulischen Primärkreis und/oder im hydraulischen Sekundärkreis wenigstens ein Schockventil vorgesehen, das sich bei Überschreitung eines gewissen Schwellenwertes für den Druck der Hydraulikflüssigkeit in einer Leitung des jeweiligen Kreises öffnet, um Druckstöße in der betreffenden Leitung abbauen zu können. Vorzugsweise ist das Schockventil zwischen Haupt- bzw. Notventil und Lenkanlage (beispielsweise eine Knicklenkung eines Radladers). Vorzugsweise ist das Schockventil nahe der Lenkanlage angeordnet, d.h. es stellt das letzte Ventil vor der Lenkanlage dar und schützt alle anderen in der jeweiligen Leitung liegenden Ventile, die weiter von der Lenkanlage entfernt sind, vor Druckstößen. In einer Ausführungsform sind in der Ventilmimik also wenigstens zwei Schockventile vorgesehen. Das Schockventil ist so ausgebildet, dass es sich bei Überschreitung eines gewissen Schwellenwertes für den Druck der Hydraulikflüssigkeit in einer Leitung des Primär- und/oder Sekundärkreises, je nach dem welcher Kreis gerade aktiv ist, öffnet, um Druckstöße in der betreffenden Leitung abbauen zu können.

Das Lenksystem kann wenigstens eine elektrische Lenkeinrichtung in Form eines Lenkrades oder Joysticks aufweisen, über welche die elektrohydraulische Lenkanlage betätigt wird, und die Funktion eines Sekundärsteuergerätes zur Steuerung des Notventils übernimmt. Denkbar ist es, dass beispielsweise der Fahrzeugleitrechner die Steuerung des Hauptventils übernimmt. Weiterhin kann vorgesehen sein, dass im Notbetrieb die Lenkeinrichtung die Steuerung des Notventils übernimmt und damit entkoppelt von dem Fahrzeugleitrechner arbeitet und die Lenkbarkeit gewährleistet.

Weiterhin ist es denkbar, dass das Lenksystem wenigstens eine elektrische Schaltung aufweist, welche die Spannungsversorgung zur Steuerung des Notventils erst durch ein Freigabesignal des Fahrzeugleitrechners zulässt, um das Notventil in einen Bereitschaftsmodus zu versetzten.

In weiterer Ausgestaltung der Erfindung ist wenigstens eine elektrische Schaltung vorgesehen, welche die Position der Armlehne der mobilen Arbeitsmaschine erfasst, auf der die elektrische Lenkeinrichtung montiert ist, und die Versorgung der Endstufe der pulsweitenmodulierten Leistungsausgänge nur dann ermöglicht, wenn sich die Armlehne in Funktionsstellung befindet.

Weiterhin kann vorgesehen sein, dass wenigstens eine elektrische Schaltung vorgesehen ist, welche die Versorgung der Endstufe der pulsweitenmodulierten Leistungsausgänge auch dann ermöglicht, wenn sich die Armlehne nicht in Funktionsstellung befindet, indem diese durch den Fahrzeugleitrechner und eine Relaisschaltung angesteuert wird, um einen Funktionstest des angesteuerten Ventils durchführen zu können.
Die Erfindung betrifft des Weitern ein elektrohydraulisches Lenksystem, insbesondere für mobile Arbeitsmaschinen, insbesondere Radlader, mit einer wenigstens einer Steuerung, die wenigstens einen hydraulischen Zweig umfasst, der wenigstens einen hydraulischen Kreis aufweist, wobei der hydraulische Kreis wenigstens ein Hauptventil zur hydraulischen Ansteuerung der Lenkanlage im Normalbetrieb sowie wenigstens ein, vorzugsweise genau ein oder auch zwei Absperrventile umfasst, die sich zwischen dem Hauptventil und der Lenkanlage befinden, und wobei wenigstens ein Ventil vorgesehen ist, das derart angeordnet ist, dass es das oder die Absperrventile schließen kann, wobei vorzugsweise vorgesehen ist, dass das Ventil stromlos offen ist. Durch eine solche Ausgestaltung eines Lenksystems ist es beispielsweise möglich, eine Funktionsüberprüfung des oder der Absperrventile derart durchzuführen, dass mittels des genannten Ventils das oder die Absperrventile in ihre Schließstellung bewegt werden und geprüft wird, ob ein durch die Lenkeinrichtung (Lenkrad, Joystick etc.) abgegebenes Signal zu einer Auslenkung der Lenkanlage führt. Ist dies nicht der Fall, kann festgestellt werden, dass das oder die Absperrventile zuverlässig schließen.

Die Erfindung betrifft des Weiteren eine mobile Arbeitsmaschine, insbesondere Radlader, mit wenigstens einem elektrohydraulischen Lenksystem gemäß einem der Ansprüche 1 bis 11. Wie oben ausgeführt, ist vorzugsweise vorgesehen, dass gefahrbringende Fehler sowohl im elektrischen als auch im hydraulischen Zweig des Primärkreises der elektrohydraulischen Lenkanlage erkannt und die Funktionstüchtigkeit des Lenksystems durch Umschalten auf den Sekundärkreis aufrechterhalten wird.

Vorzugsweise wird die Funktionstüchtigkeit der im Notbetrieb wirkenden Bauteile in regelmäßigen zeitlichen Abständen überprüft und sichergestellt. Es sind dies insbesondere das Notventil, das elektrisch betätigte, vorzugsweise als 3/2-Wegeventil ausgeführte Ventil, und die vorzugsweise als 2/2-Wege Sperrventile ausgeführten Ventile, die durch das 3/2-Wegeventil abgesperrt werden.

Die Überprüfung der Funktionstüchtigkeit der Bauteile in Primär- und Sekundärkreis stützt sich vorzugsweise auf die folgende Sensorik:
- Lagerückmeldung des Lenkwinkels
- Lagerückmeldung von Hauptventil und/oder Notventil
- Hydraulikdruck in der Pumpenleitung

Weitere Einzelheiten und Vorteile der Erfindung werden anhand eines in der Zeichnung dargestellten Ausführungsbeispiels näher erläutert.

Es zeigen:
- Figur 1a, 1b, 1c:: eine Darstellung des hydraulischen Kreises eines Lenksystems mit Joystick-Lenkanlage;
- Figur 2:: eine Darstellung des hydraulischen Kreises eines Lenksystems mit Joystick-Lenkanlage und vorgesteuertem Notventil;
- Figur 3a, 3b:: eine Darstellung eines ersten Zweiges des elektrischen Kreises eines Lenksystems mit Joystick-Lenkanlage;
- Figur 4a, 4b:: eine Darstellung eines zweiten Zweiges des elektrischen Kreises eines Lenksystems mit Joystick-Lenkanlage und
- Figur 5a, 5b:: eine Darstellung des hydraulischen Kreises eines Lenksystems mit Komfort-Lenkanlage.

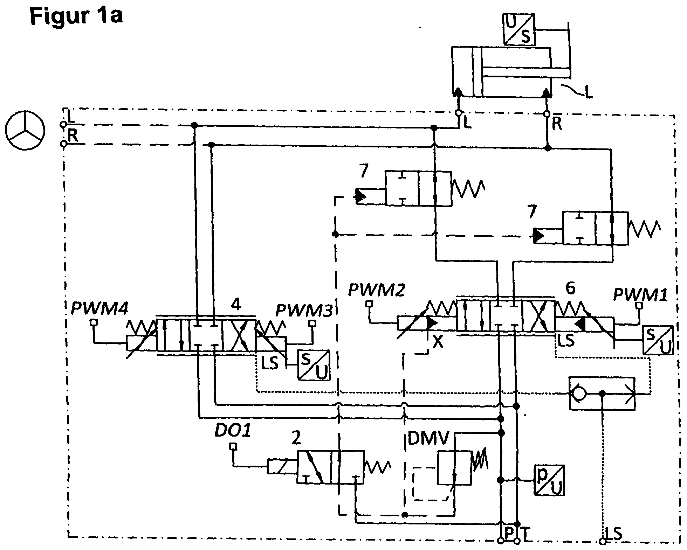

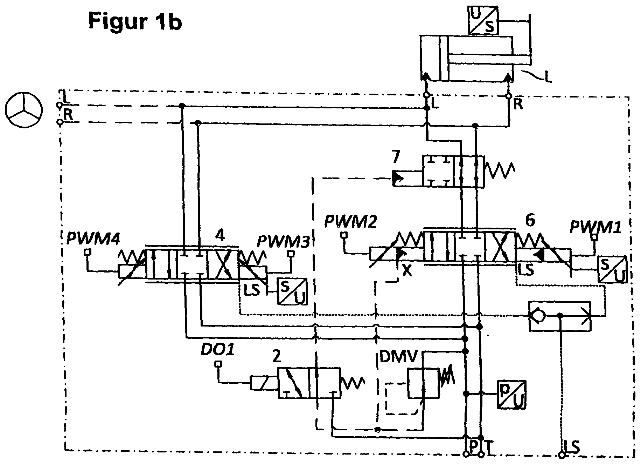

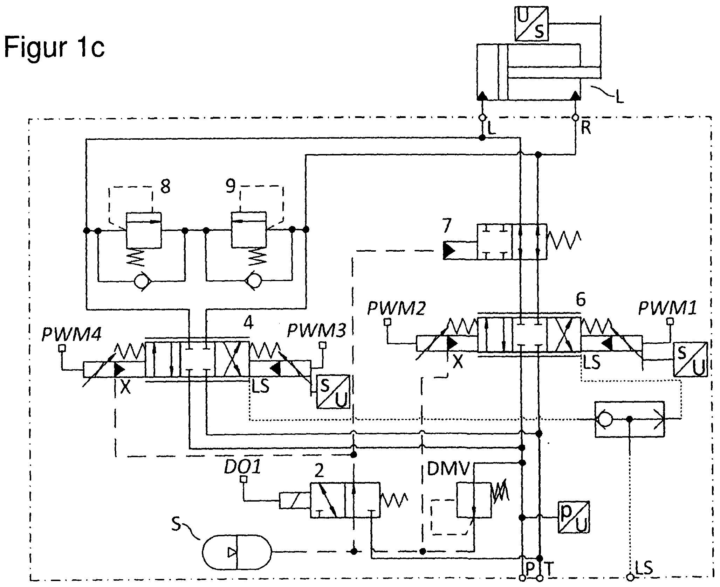

Figur 1a, 1b, 1c zeigt mit dem Bezugszeichen L eine Lenkanlage einer mobilen Arbeitsmaschine, insbesondere eines Radladers. Die Lenkeinrichtung erfolgt durch einen Joystick, grundsätzlich sind im Rahmen der vorliegenden Erfindung auch andere Lenkeinrichtungen denkbar und von der Erfindung mitumfasst, so dass der Begriff "Joystick" als Platzhalter steht.

Die hydraulische Versorgung der Lenkanlage L erfolgt über die Pumpe P, der Rücklauf weist das Bezugszeichen T auf.

Das Lenksystem verfügt über ein Hauptventil 6 in einem hydraulischen Primärkreis, das vorzugsweise in Schieberbauweise ausgeführt ist. Das Ventil wird über die Signale PWM1 und PWM2 über den Fahrzeugleitrechner oder dergleichen entsprechend des Lenksignals angesteuert. Über das Ventil 6 wird im Normalbetrieb, in dem keine Störung vorliegt, die gesamte Ölmenge von der Pumpe P zu der Lenkanlage L bzw. zu deren Lenkzylinder geführt. In der Leitung zwischen der Pumpe P und dem Hauptventil 6 befindet sich der Drucksensor p/U.

Kommt es zu einer Störung der Funktionsfähigkeit des Hauptventils 6, beispielsweise weil dieses in einem geöffneten oder teilweise geöffneten Zustand stecken bleibt, hat dies einen gefahrbringenden Fehler zur Folge. Die Maschine wäre unlenkbar oder zumindest wäre die Lenkbarkeit wesentlich eingeschränkt.

Um auch bei einer Störung der Funktionsfähigkeit des Hauptventils 6 weiterhin eine Lenkbarkeit der Maschine bereitzustellen, weist das Lenksystem einen hydraulischen Sekundärkreis auf, in dem sich ein Notventil 4 befindet. Dieses Notventil ist kleiner, vorzugsweise deutlich kleiner bemessen als das Hauptventil 6, da es nur die (geringere) Ölmenge bewältigen muss, die im Notbetrieb anfällt.

Kommt es zu einer Fehlfunktion im hydraulischen Primärkreis wird dies durch den Fahrzeugleitrechner erkannt und der Sekundärkreis wird durch Stromlosschalten des elektrischen Ventils 2, das vorzugsweise als elektrisch betätigtes 3/2-Wegeventil ausgeführt ist, und dem das Druckminderventil DMV vorgeschaltet ist, aktiviert bzw. die zwischen der Lenkanlage L und dem Hauptventil 6 befindlichen Absperrventile 7 werden geschlossen.

In Figur 1a sind zwei Absperrventile in Form von Sitz- bzw. Patronenventilen dargestellt. Als besonders vorteilhaft erweist sich jedoch die Anordnung gemäß Figur 1b und 1c, bei der die Absperrstufe in Form eines einzigen Ventils 7, das vorzugsweise als 4/2-Wegeventil ausgebildet ist. Der Vorteil gegenüber der Verwendung mehrerer Ventile liegt in der verbesserten Diagnosemöglichkeit bzw. Funktionstüchtigkeit.

Ein steckendes Hauptventil 6 ist ein gefahrbringender Fehler im Primärkreis, bei dem durch Druckbeaufschlagung der nachgeschalteten hydraulisch betätigten Sperrventile 7, die vorzugsweise als 2/2-Wege-Ventile ausgeführt sind, im Vorsteuerkreis der L-Anschluss und R-Anschluss abgesperrt wird, so dass die Lenkanlage L durch das Hauptventil 6 nicht mehr angesteuert werden kann.

In gleicher Weise wird auch bei Fehlfunktion des Fahrzeugleitrechners selbst der Primärkreis durch Stromlosschalten des elektrisch betätigten 3/2-Wegeventils 2 im Vorsteuerkreis stillgelegt. Der Ausfall des Fahrzeugleitrechners hat zur Folge, dass die Ansteuerung der Proportional-Druckreduzierventile am Hauptventil 6 nicht mehr möglich ist.

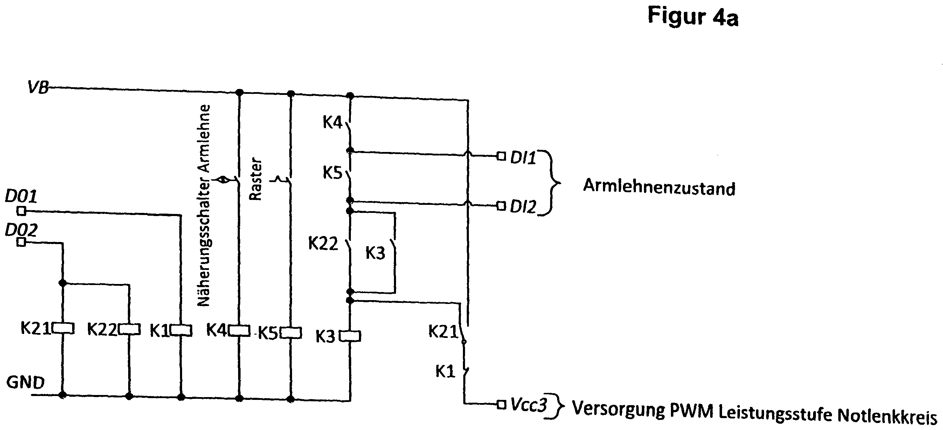

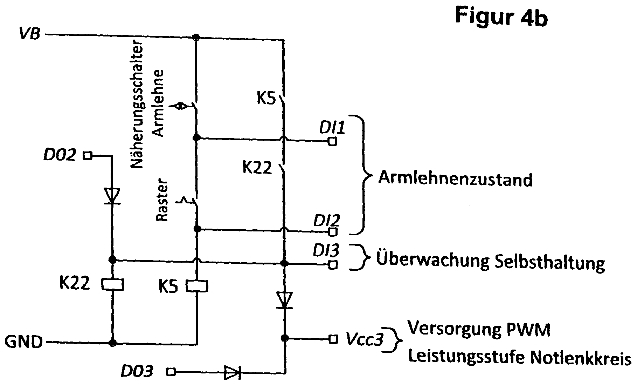

Das Notventil 4 wird in der in Figur 1a, 1b und 1c dargestellten Ausführungsform direkt elektrisch über die Signale PWM3 und PWM4 betätigt, so dass eine Steuerölversorgung des Notventils über das Ventil 2 nicht erforderlich ist. Wird das Notventil 4 nicht benötigt, weil das Lenksystem in normalen Betriebsmodus arbeitet, sorgt der in Figur 4 dargestellte Öffner K1 für eine Unterbrechung der Spannungsversorgung der Endstufen der externen, d.h. nicht in den Fahrzeugleitrechner integrierten Elektronik. Durch den Öffner K1 wird die Auslenkung des Schieberventils 4 unterbunden. Es verbleibt im normalen Betriebszustand in einer Sperrstellung, in der eine Verbindung zwischen Pumpe P und Lenkanlage L über das Notventil 4 unterbunden wird.

Bei der Anordnung gemäß Figur 1b übernimmt das Lenkorbitrol, welches in der Figur schematisch links oben durch die Anschlüsse L und R dargestellt ist, den Abbau von Druckspitzen durch äußere Einflüsse (beispielsweise wenn ein Radlader gegen ein Hindernis fährt und eine große Gegenkraft gegen die Lenkkraft erzeugt wird).

In der in Figur 1c dargestellten Ausführungsform sind zwei Schockventile 8 und 9 zwischen Lenkanlage L und Hauptventil 6 bzw. Notventil 4 (je nach dem, welcher Kreis gerade in Betrieb ist) angeordnet, wobei die Schockventile 8 und 9 die zum Abbau von Druckspitzen dienen. Diese Schockventile können beispielsweise den Abbau von Druckspitzen übernehmen, wenn das Lenkorbitrol wie in der Figur dargestellt wegfällt. Die Schockventile 8 und 9 sind jeweils als 2/2-Wegeventile ausgeführt, die sich in von der Hydraulikleitung abgehende Richtung dann öffnen, wenn ein bestimmter Druck überschritten wird. Beispielsweise sind die Ventilklappen bzw. Ventilkörper federbeaufschlagt, wie dies in der Figur 1c schematisch dargestellt wird. Ferner kann vorgesehen sein, dass der Öffnungsquerschnitt der Druckventile sich abhängig vom Druck verändert, beispielsweise mit steigendem Druck erhöht. In der gezeigten Ausführungsform weist jedes Druckventil eine Bypassleitung auf, in der ein Rückschlagventil, beispielsweise eine Rückschlagklappe oder ein Kugelventil angeordnet ist. So wird ein Fluss von Hydraulikflüssigkeit, die zuvor ein Stoßventil passiert hat, in diejenige Hydraulikleitung ermöglicht, in der der geringere Druck herrscht, also typischerweise diejenige Hydraulikleitung, in der eine Druckspitze gerade nicht auftritt.

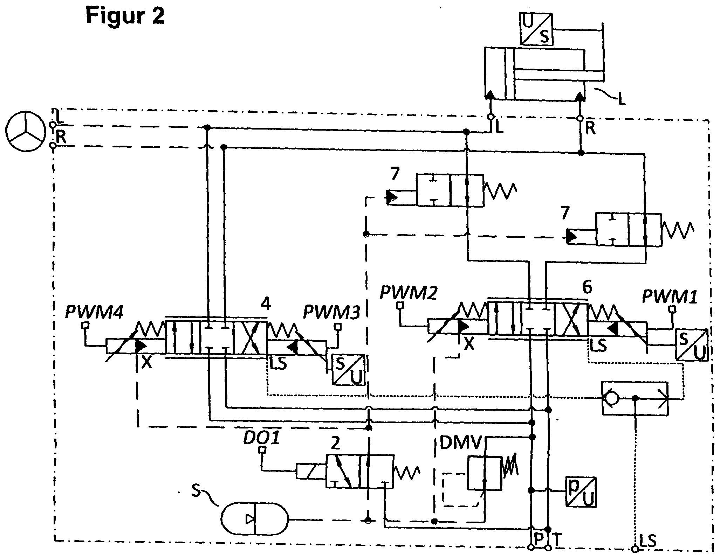

Figur 2 zeigt eine Ausführungsform, die an sich der gemäß Figur 1a entspricht, mit dem Unterschied, dass das Notventil 4 bei Stromlosschalten des Ventils 2 stets mit Steuerdruck versorgt wird, und zwar unabhängig davon, ob die Fehlfunktion bzw. Störung aus dem hydraulischen Zweig des Lenksystems oder auch dem elektrischen Zweig des Lenksystems kommt. In dem Ausführungsbeispiel gemäß Figur 2, das entsprechend Figur 1b auch nur mit einem Absperrventil ausgeführt sein kann, erfolgt die Steuerdruckunterbrechung des Notventils 4 über das Ventil 2, das stromlos offen und im bestromten Zustand geschlossen ist. In dem Ausführungsbeispiel gemäß Figur 1a und 1b erfolgt die Unterbrechung der Spannungsversorgung der Endstufen der externen Elektronik durch das Öffnen des Schalters K1.

Sowohl in dem in Figur 1a und 1b dargestellten Fall als auch in der Ausführung gemäß Figur 2 erfolgt die Ansteuerung der Proportional-Druckreduzierventile des Notventils 4 nicht durch den Fahrzeugleitrechner, sondern durch Endstufen einer externen Elektronik, welche direkt pulsweitenmodulierte Signale PWM 3 und PWM 4 proportional zur Stellung der Lenkeinrichtung ausspeisen, und völlig autark arbeiten. Die Lenkeinrichtung kann entweder ein elektrisches Lenkrad oder ein elektrischer Bedienhebel (Joystick) sein, wobei die beiden Endstufen zur Steuerung des Notventils 4 in der Elektronik der Lenkeinrichtung integriert sein können.

Der in den Figuren 1a und 1b und 2 dargestellte Aufbau hat den Vorteil, dass die Steuerung des Notventils 4 im Fehlerfall keinerlei Information aus dem Lenkkreis benötigt und sehr einfach und kostengünstig anstelle einer doppelten Ausführung des Fahrzeugleitrechners umgesetzt werden kann. Dabei ist eine Positionsregelung der Lenkung im Notbetrieb zwar nicht möglich, jedoch kann die Lenkung im Notbetrieb gesteuert erfolgen, was akzeptabel ist, da der Notbetrieb nicht die Regel darstellt und der Sekundärkreis ohnehin nur sporadisch beansprucht wird, nämlich dann wenn eine Störung im Primärkreis vorliegt.

Die Lenkanlage verfügt über eine Reihe von Sensoren, welche zum Einen der Regelung dienen, und zum Anderen für die Diagnose von Fehlern benötigt werden.

Beispielsweise wird der eine Lagerückmeldung des Lenkwinkels sowohl für die Positionsregelung des Primärkreises, als auch für dessen Überwachung während des Betriebes benötigt, um ggf. die Notlenkung zu aktivieren.

Um die Funktionsfähigkeit des Notventils 4, das im Normalbetrieb des Lenksystems nicht in Betrieb ist und in seiner Sperrstellung steht, überprüfen zu können, werden in regelmäßigen Zeitabständen Funktionsüberprüfungen durchgeführt. Das Notventil 4 ist lageüberwacht.

Die Funktionsüberprüfung gestaltet sich wie folgt:
Der Kolben des Notventils 4 gemäß der Ausführungsform in Figur 2 wird bei stehendem Dieselmotor und eingeschalteter Zündung durch Stromlosschalten des elektrisch betätigten 3/2-Wegeventils 2 kurzzeitig mit Steuerdruck versorgt, und es werden Joystickvorgabe und Kolbenstellung durch den Fahrzeugleitrechner verglichen, um festzustellen, ob der Kolben in die korrekte Richtung geschoben wird. Im Anschluss daran wir das elektrisch betätigte 3/2-Wegeventil 2 mit Strom versorgt und dadurch geschlossen. Der Fahrzeugleitrechner überprüft, ob der Kolben nach der Auslenkung wieder seine Nulllage einnimmt, die beispielsweise in den Figuren 1a und 1b und 2 gezeigt ist.

Dieser Funktionstest des Notventils 4 erfordert ausreichend Steuerdruck bei stehendem Dieselmotor, welcher durch den regulären Funktionstest der elektrischen Notlenkpumpe auch bei stehendem Dieselmotor bereitgestellt werden kann. Während des Funktionstests der elektrischen Notlenkpumpe wird ein in Figur 2 dargestellter Speicher S im Vorsteuerkreis geladen, um ausreichend Steuerdruck für die Funktionstests bei stehendem Dieselmotor bereitstellen zu können.

Bei dem genannten Funktionstest des Notventils 4 wird auch gleichzeitig das Ventil 2 überprüft, das im gefahrbringenden Fehlerfall mit Federkraft betätigt geöffnet werden muss, jedoch nur dann, wenn es sich um ein elektrohydraulisch vorgesteuertes Notventil handelt. Liegt eine Störung des Ventils 2 dahingehend vor, dass dieses permanent geschlossen ist, wird dies dadurch erkannt, dass der Kolben des Notventils 4 trotz Vorgabe nicht verschoben wird, da kein Steuerdruck anliegt.

Liegt ein elektrisch angesteuertes Notventil vor, wie dies in dem Ausführungsbeispiel gemäß Figur 1a und 1b der Fall ist, wird zum Zwecke der Funktionsüberprüfung durch Stromlosschalten des digitalen Spannungsausganges DO1 der Öffner K1 (vgl. Figur 4) geschlossen. Das 3/2-Wegeventil 2 würde weiterhin, als Konsequenz des Stromlosschaltens des digitalen Spannungsausganges DO1, öffnen, was jedoch keinen Einfluss auf den Funktionstest des Notventils 4 hat.

Ein Vorteil der Ausgestaltung gemäß Figur 1a und 1b besteht darin, dass für den Funktionstest des Notventils 4 kein Steuerdruck benötigt wird, so dass der Speicher S im Vorsteuerkreis gemäß Figur 2 entfallen kann.

Vorzugsweise unmittelbar nachdem der Dieselmotor gestartet wurde überprüft der Fahrzeugleitrechner die Funktion der beiden 2/2-Wege Sperrventile 7 bzw. des einzigen Sperrventils 7, die sich zwischen dem Hauptventil 6 und der Lenkanlage L befinden und die im Normalzustand des Lenksystems geöffnet sind.

Die Funktionsüberprüfung des oder der Ventile 7 ist erforderlich, um sicherstellen zu können, dass diese im Fehlerfall des Primärkreises auch tatsächlich L-Anschluss und R-Anschluss der Lenkanlage L schließen. Dieses zuverlässige Schließen ist erforderlich, um sicherzustellen, dass bei fehlerhaften Hauptventil 6 kein Hydraulikmedium über das Hauptventil 6 an die Lenkanlage L gelangt.

Für diesen Funktionstest wird das elektrisch betätigte 3/2-Wegeventil 2 erneut stromlos geschaltet, womit die beiden 2/2-Wege Sperrventile 7 bzw. das 4/2-Wegesperrventil 7 mit Steuerdruck beaufschlagt werden und dabei in ihre Schließstellung verfahren und somit und L-Anschluss und R-Anschluss der Lenkanlage L schließen.

Sodann wird vom Fahrzeugleitrechner das Hauptventil 6 geöffnet, wobei keine Bewegung an der Lagerückmeldung des Lenkwinkels festgestellt werden darf, um die Funktionstüchtigkeit der beiden 2/2-Wege Sperrventile 7 bzw. des 4/2-Wegesperrventils 7 im Primärkreis bestätigen zu können.

Ist die Lenkeinrichtung ein Joystick, würde dieser typischerweise auf einer Armlehne in der Fahrerkabine montiert sein, wobei diese Armlehne über einen Schalter verfügt, welcher signalisiert, ob sich die Armlehne in Funktionsstellung befindet. Befindet sich die Armlehne nicht in ihrer Funktionsstellung, sind die beiden pulsweitenmodulierten Signale PWM 3 und PWM 4 für die Steuerung der Proportional-Druckreduzierventile des Notventils 4 unterbrochen. Wäre dies nicht der Fall, würde ansonsten bei einer Betätigung des Joysticks im Rahmen des Funktionstest der beiden 2/2-Wege Sperrventile 7 bzw. des 4/2-Wegesperrventils 7 stets eine Lenkbewegung durch Betätigen des Notventils 4 erzeugt werden, da dieses bei Stromlosschalten des 3/2-Wegeventils 2 ebenfalls mit Steuerdruck versorgt würde.

Der eben beschriebene Funktionstest der 2/2-Wege Sperrventile 7 bzw. des 4/2-Wegesperrventils 7 kann daher nur dann durchgeführt werden, wenn der Fahrzeugleitrechner erkennt, dass sich die Armlehne nicht in Funktionsstellung befindet.

Der eben beschriebene Funktionstest der beiden 2/2-Wege Sperrventile 7 bzw. des 4/2-Wegesperrventils 7 übernimmt gleichzeitig die Funktionsprüfung des elektrisch betätigten 3/2-Wegeventils 2, welches im gefahrbringenden Fehlerfall mit Federkraft betätigt öffnen muss.

Das Unterbrechen der beiden pulsweitenmodulierten Signale PWM 3 und PWM 4, welche die Proportional-Druckreduzierventile des Notventils 4 oder das Notventil direkt elektrisch steuern, ist erforderlich, wenn sich die Armlehne nicht in Funktionsstellung befindet. Ansonsten würde bei Ausfall des Fahrzeugleitrechners, was ein Stromlosschalten des elektrisch betätigten 3/2-Wegeventils 2 zur Folge hätte, stets das Notventil 4 arbeiten, und zwar abhängig von Position der Lenkeinrichtung, die im inaktiven Zustand jede beliebige Position einnehmen kann, und durch den Fahrzeugleitrechner nicht beeinflusst werden kann.

Sofern es sich bei der Lenkeinrichtung um einen Joystick handelt, der typischerweise am Fahrersitz an einer Armlehne montiert ist, und das Gerät zum Ausfallzeitpunkt des Fahrzeugleitrechners durch ein hydraulisches Lenkrad gesteuert würde, ist es erforderlich, die beiden pulsweitenmodulierten Signale PWM 3 und PWM 4 zum Notventil 4 zu unterbrechen, da dieses ansonsten eine ungewollte Lenkbewegung verursachen würde, selbst dann, wenn sich die Armlehne nicht in Funktionsstellung befindet.

Die Unterbrechung der beiden pulsweitenmodulierten Signale PWM 3 und PWM 4 zur Steuerung der Proportional-Druckreduzierventile des Notventils 4 kann beispielsweise durch Unterbrechung der Spannungsversorgung der Endstufen durch eine Relaisschalung K4 und K5 gemäß Figur 4 erfolgen, welches über einen Schließkontakt in der Armlehne gespeist wird. Der Kontakt in der Armlehne schließt, sobald der Maschinenführer die Armlehne in Funktionsstellung bringt.

Wie dies aus den Figuren 1a und 1b und 2 hervorgeht, ist der hydraulische Zweig der Steuerung zweikreisig ausgeführt. Auch die Ansteuerung von Haupt- und Notventil erfolgen völlig unabhängig voneinander und zwar durch getrennte Elektronikeinheiten. Kommt es beispielsweise zum Ausfall einer das Hauptventil steuernden Komponente, übernimmt eine andere Komponente die Steuerung des Notventils und ermöglicht auf diese Weise die Notlenkung der Arbeitsmaschine oder dergleichen. Anstatt einer zweikreisigen Ausführung ist auch eine Ausführung mit mehr als zwei Kreisen denkbar und von der Erfindung mit umfasst.

In einer besonders bevorzugten Ausgestaltung der Erfindung ist auch die Lenkeinrichtung selbst wenigstens zweikreisig ausgeführt. Die Lenkeinrichtung ist beispielsweise als Lenkrad oder Joystick, vorzugsweise als elektrisches Lenkrad oder elektrischer Joystick ausgeführt.

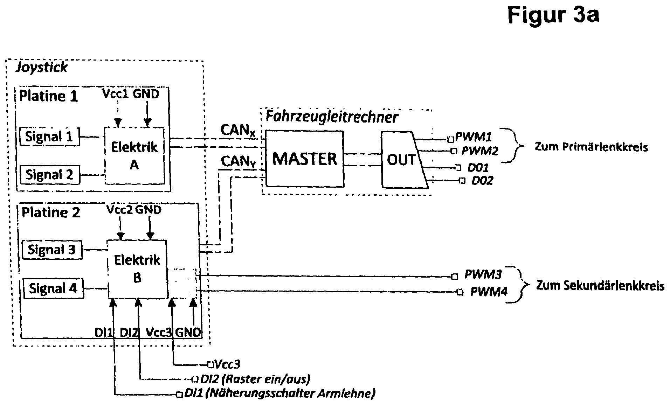

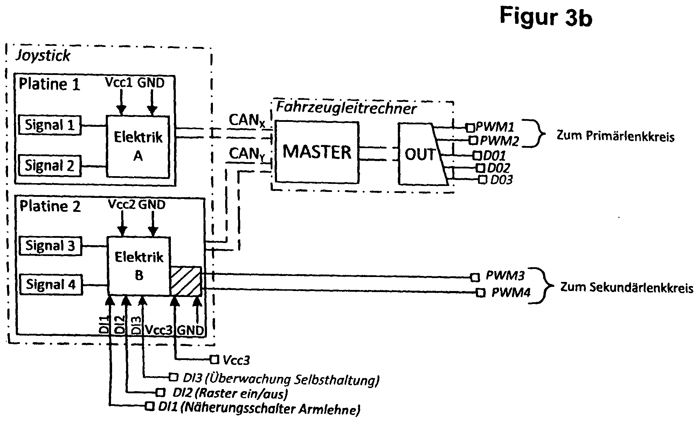

Wie dies aus Figur 3a und 3b hervorgeht, verfügt die Lenkeinrichtung über zwei Elektronikeinheiten A und B, die galvanisch vollständig voneinander getrennt sind und die vollständig unabhängig voneinander arbeiten. Für Steuerungs- und Diagnosezwecke stehen - wie aus Figur 3a und 3b ersichtlich - dem Fahrzeugleitrechner die Information von vier Signalspuren (Signal 1, Signal 2, Signal 3 und Signal 4) zur Verfügung, welche wiederum galvanisch getrennt an den Fahrzeugleitrechner 100 übermittelt werden.

Bei Ausfall einer Elektronikeinheit A oder B stehen dem Fahrzeugleitrechner weiterhin zwei Signalspuren (Signal 1 und Signal 2 oder Signal 3 und Signal 4) der zweiten (nicht ausgefallenen) Elektronikeinheit zur Verfügung, womit die Möglichkeit zur Steuerung des Primärlenkkreises weiterhin, oder zumindest bis zum Stillstand der Maschine, mit uneingeschränktem Bedienkomfort gegeben ist.

Die beiden Elektronikeinheiten A und B unterscheiden sich somit lediglich dadurch, dass Elektronikeinheit B über Endstufen verfügt, welche wie aus den Figuren 1a und 1b und 2 ersichtlich die beiden pulsweitenmodulierten Signale PWM 3 und PWM 4 ausspeisen, und damit die Proportional-Druckreduzierventile des Notventils 4 zu jedem Zeitpunkt steuern, vorausgesetzt, die Armlehne befindet sich in Funktionsstellung, was beispielsweise durch Unterbrechung der Spannungsversorgung der Endstufen durch eine Relaisschalung K4 (vgl. Figur 4a) erfolgt, welches über einen Kontakt in der Armlehne gespeist wird. Figur 4b zeigt eine gegenüber Figur 4a vereinfachte Relaisschaltung mit dem Signaleingang (Überwachung Selbsthaltung) DI3 und dem Spannungsausgang DO3.

Zusätzlich zur Erkennung der Funktionsstellung der Armlehne wird die Steuerung des Primärkreises der elektrohydraulischen Lenkung über einen weiteren rastenden Schalter aktiviert. Im nicht rastenden Zustand bewirkt dieser Schalter ebenfalls eine Unterbrechung der Spannungsversorgung der Endstufen durch eine Relaisschalung K5. Über die in Figur 3a und 3b dargestellten digitalen Spannungseingänge DI1 und DI2 wird der Zustand des Armlehnen-Näherungsschalters und des Raster durch den Fahrzeugleitrechner überwacht. Trotz geschlossener Kontakte K4 und K5 erlangt Notventil 4 jedoch erst dann Funktionsbereitschaft, wenn der Fahrzeugleitrechner nach Prüfung von Startbedingungen über den digitalen Spannungsausgang DO2 die Selbsthalte-Relaisschaltung K22 und K3 aktiviert, womit die externe Endstufe mit Spannung versorgt wird. Figur 3b entspricht der Anordnung gemäß Figur 3a mit dem zusätzlichen Spannungseingang DI3 (Überwachung Selbsthaltung) und dem zugehörigen Spannungsausgang DO3. Der ergänzte DI3 dient zur Überwachung und der Diagnosefähigkeit der Spannungsvorsgung Vcc3 der Endstufen PWM3 und PWM4. Ein Fehler an den Relais K5 und K22, insbesondere ein Nichtöffnen, kann zur Folge haben, dass weiterhin Spannung an Vcc3 anliegt und das Notventil weiterhin "lauern" würde.

Startbedingungen können der Zustand des Armlehnen-Näherungsschalters und des Raster sein, und des Weiteren die aktuelle Position der Lenkeinrichtung.

Im Falle eines direkt elektrisch betätigten Notventils 4 wird die Versorgung der externen Endstufe zusätzlich durch die Relaisschaltung K1 geführt. Solange der Notlenkkreis nicht benötigt wird, sorgt der Öffner K1 für die Unterbrechung der Spannungsversorgung der Endstufen der externen Elektronik. Anstelle der Steuerdruckunterbrechung durch das 3/2-Wegeventil 2 wird durch den Öffner K1 die Auslenkung des Schieberventils unterbunden.

Für den Funktionstest des Notventils 4 ist es erforderlich, die Relaisschaltungen der Armlehne zu umgehen, indem über den Schalter K21, welcher über den digitalen Ausgang DO2 angesteuert wird, die externen Endstufen, welche die beiden pulsweitenmodulierten Signale PWM 3 und PWM 4 ausspeisen, mit Spannung versorgt werden.

Im regulären Funktionsbetrieb des Primärlenkkreises der elektrohydraulischen Lenkung wird die Auslenkung des Kolbens des Notventils 4 durch Bestromung des elektrisch betätigte 3/2-Wegeventils 2 unterbunden. Da das Ventil 2 im bestromten Zustand geschlossen ist, steht an dem Notventil 4 kein Steuerdruck an und es verharrt ist der in den Figuren 1 und 2 gezeigten Schließstellung.

Im Falle eines direkt elektrisch betätigten Notventils 4 wird durch Schalten des digitalen Spannungsausganges DO1 der Öffner K1 geöffnet und die Spannungsversorgung der externen Endstufen unterbrochen, womit die Auslenkung des direkt elektrisch betätigten Notventils 4 unterbunden wird.

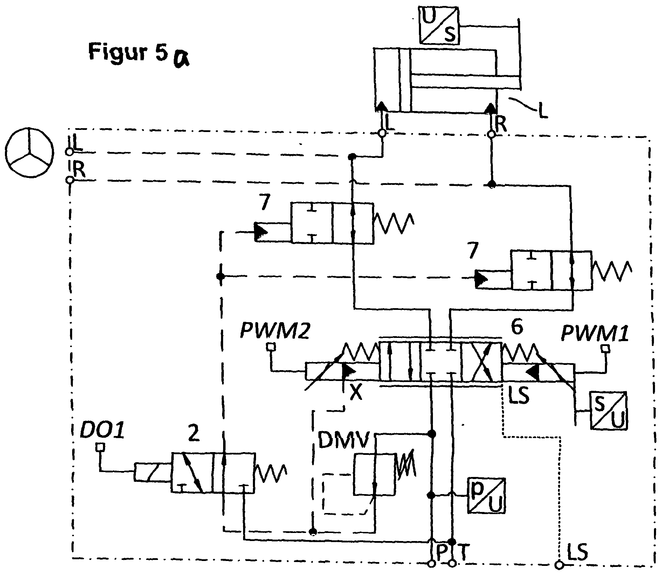

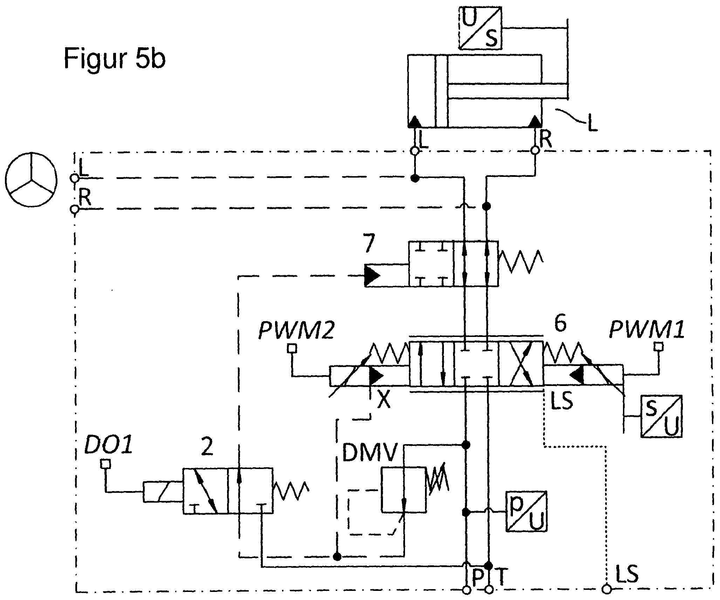

Es ist denkbar, das elektrohydraulische Lenksystem entweder
1. als Hauptlenkanlage, allein stehend, zu betreiben, wobei die Lenkreinrichtung als elektrisches Lenkrad oder elektrischer Joystick ausgeführt sein kann, oder
2. als Ergänzung einer rein hydraulisch gesteuerten Hauptlenkanlage mit Lenkrad in Form einer elektrohydraulischen Joysticklenkung zu installieren, oder
3. den Primärkreis der elektrohydraulischen Lenkanlage alleine - ohne Notventil - als Ergänzung einer hydraulischen Hauptlenkanlage mit Lenkrad zu installieren, um die hydraulische Lenkanlage mit Lenkrad durch neue Bedienmerkmale als Komfortlenkung zu erweitern (Komfortlenkung), wie dies in Figur 5 gezeigt ist oder
4. elektrohydraulische Joysticklenkung nach 2. und Komfortlenkung nach 3. zu kombinieren.

Die Ausführungsform gemäß Figur 5a, 5b entspricht im Wesentlichen der gemäß Figur 1a, 1b, 1c, allerdings mit dem Verzicht auf das Notventil 4. Einige der oben genannten Funktionen, wie beispielsweise die zuverlässige Absperrung des oder der Absperrventile 7 im Fehlerfall oder beispielsweise die Möglichkeit einer Funktionsprüfung des oder der Ventile 7 durch Öffnen des Ventils 2 und das dadurch bedingte Schließen des oder der Ventile 7 und Betätigung der Lenkeinrichtung (Lenkrad, Joystick etc.) und Überprüfung einer Auslenkung der Lenkanlage L können durchgeführt werden. Analog zu Figur 1a sind in Figur 5a zwei Absperrventile 7 beispielsweise in Form von Sitz- bzw. Patronenventilen dargestellt. In Figur 5b ist diese Absperrstufe in Form eines einzigen Ventils 7 ausgebildet, das vorzugsweise als 4/2-Wegeventil ausgeführt ist. Wie oben ausgeführt wurde, können sich dadurch eine verbesserte Diagnosemöglichkeit und eine verbesserte Funktionstüchtigkeit ergeben.

## Patentansprüche

1. Elektrohydraulisches Lenksystem, insbesondere für mobile Arbeitsmaschinen, insbesondere Radlader, mit
wenigstens einer Steuerung, die wenigstens einen hydraulischen Zweig umfasst, der wenigstens einen hydraulischen Primärkreis und wenigstens einen hydraulischen Sekundärkreis aufweist, wobei
der hydraulische Primärkreis wenigstens ein Hauptventil (6) zur hydraulischen Ansteuerung der Lenkanlage im Normalbetrieb umfasst,
der hydraulische Sekundärkreis wenigstens ein Notventil (4) zur hydraulischen Ansteuerung der Lenkanlage im Notbetrieb umfasst,
das Notventil kleiner ausgebildet ist als das Hauptventil, **dadurch gekennzeichnet, dass** ein stromlos offenes Ventil (2) vorgesehen ist, das derart angeordnet ist, dass es im Notbetrieb stromlos geschaltet ist und das Notventil mit Steuerdruck versorgt und ein oder mehrere Absperrventile schließt, die sich zwischen dem Hauptventil und der Lenkanlage befinden.

2. Elektrohydraulisches Lenksystem nach Anspruch 1, **dadurch gekennzeichnet, dass** die Steuerung wenigstens einen elektrischen Zweig umfasst, der wenigstens einen elektrischen Primärkreis und wenigstens einen elektrischen Sekundärkreis umfasst, wobei wenigstens ein Fahrzeugleitrechner vorgesehen ist, der den elektrischen Primärkreis steuert, und wobei wenigstens zwei Endstufen vorgesehen sind, die den elektrischen Sekundärkreis steuern und die nicht durch den Fahrzeugleitrechner, sondern vorzugsweise direkt durch die Lenkeinrichtung des Lenksystems gesteuert werden.

3. Elektrohydraulisches Lenksystem nach einem der vorhergehenden Ansprüche, **dadurch gekennzeichnet, dass** der elektrische Sekundärkreis über wenigstens zwei proportionale Endstufen verfügt, deren vorzugsweise pulsweitenmodulierte Signale direkt durch die Lenkeinrichtung gesteuert werden, wobei vorzugsweise vorgesehen ist, dass die Elektronik über Endstufen proportional zu einer Auslenkung in Form von pulsweitenmodulierten Leistungsausgängen ausgibt, um die Proportional-Druckreduzierventile des Notventils zu steuern oder dieses elektrisch direkt zu betätigen.

4. Elektrohydraulisches Lenksystem nach einem der vorhergehenden Ansprüche, **dadurch gekennzeichnet, dass** das Notventil mit Lagerückmeldung ausgeführt ist und/oder im hydraulischen Sekundärkreis der Lenkanlage sitzt, und entweder elektrohydraulisch vorgesteuert oder elektrisch direkt betätigt werden kann.

5. Elektrohydraulisches Lenksystem nach einem der vorhergehenden Ansprüche, **dadurch gekennzeichnet, dass** wenigstens eine Hauptlenkpumpe und/oder wenigstens eine Notlenkpumpe vorgesehen sind, die zur hydraulischen Versorgung des hydraulischen Primärkreises und/oder des hydraulischen Sekundärkreises dienen, wobei vorzugsweise vorgesehen ist, dass der Steuerdruck für Primär- und Sekundärkreis über wenigstens ein Druckminderventil versorgt wird, welches durch Haupt- und/oder Notlenkpumpe gespeist werden kann.

6. Elektrohydraulisches Lenksystem nach einem der vorhergehenden Ansprüche, **dadurch gekennzeichnet, dass** wenigstens ein hydraulischer Speicher im Vorsteuerkreis des hydraulischen Primär- oder Sekundärkreises vorgesehen ist, wobei vorzugsweise vorgesehen ist, dass der hydraulische Speicher derart angeordnet ist, dass er vor dem Starten des Motors, vorzugsweise des Dieselmotors, der mobilen Arbeitsmaschine durch eine elektrische Notlenkpumpe gefüllt wird.

7. Elektrohydraulisches Lenksystem nach einem der vorhergehenden Ansprüche, **dadurch gekennzeichnet, dass** im hydraulischen Primärkreis und/oder im hydraulischen Sekundärkreis wenigstens ein Schockventil vorgesehen ist, das sich bei Überschreitung eines gewissen Schwellenwertes für den Druck der Hydraulikflüssigkeit in einer Leitung des jeweiligen Kreises öffnet, um Druckstöße in der betreffenden Leitung abbauen zu können, wobei vorzugsweise vorgesehen ist, dass das Schockventil zwischen Haupt- bzw. Notventil und Lenkanlage, weiter vorzugsweise nahe der Lenkanlage angeordnet ist.

8. Elektrohydraulisches Lenksystem nach einem der vorhergehenden Ansprüche, **dadurch gekennzeichnet, dass** das Lenksystem wenigstens eine elektrische Lenkeinrichtung aufweist, die als Lenkrad oder Joystick ausgeführt sein kann, und über welche die elektrohydraulische Lenkanlage betätigt wird, und die Funktion eines Sekundärsteuergerätes zur Steuerung des Notventils übernimmt.

9. Elektrohydraulisches Lenksystem nach einem der vorhergehenden Ansprüchen, **dadurch gekennzeichnet, dass** das Lenksystem wenigstens eine elektrische Schaltung aufweist, welche die Spannungsversorgung zur Steuerung des Notventils erst durch ein Freigabesignal des Fahrzeugleitrechners zulässt, um das Notventil in einen Bereitschaftsmodus zu versetzten.

10. Elektrohydraulisches Lenksystem nach einem der vorhergehenden Ansprüche, **dadurch gekennzeichnet, dass** wenigstens eine elektrische Schaltung vorgesehen ist, welche die Position der Armlehne der mobilen Arbeitsmaschine erfasst, auf der die elektrische Lenkeinrichtung montiert ist, und die Versorgung der Endstufe der pulsweitenmodulierten Leistungsausgänge nur dann ermöglicht, wenn sich die Armlehne in Funktionsstellung befindet.

11. Elektrohydraulisches Lenksystem nach Anspruch 10, **dadurch gekennzeichnet, dass** wenigstens eine elektrische Schaltung vorgesehen ist, welche die Versorgung der Endstufe der pulsweitenmodulierten Leistungsausgänge auch dann ermöglicht, wenn sich die Armlehne nicht in Funktionsstellung befindet, indem diese durch den Fahrzeugleitrechner und eine Relaisschaltung angesteuert wird, um einen Funktionstest des angesteuerten Ventils durchführen zu können.

12. Mobile Arbeitsmaschine, insbesondere Radlader, mit wenigstens einem elektrohydraulischen Lenksystem gemäß einem der Ansprüche 1 bis 11.

## Claims

1. Electrohydraulic steering system, in particular for mobile working machines, in particular wheel loaders, comprising
at least one control system, which includes at least one hydraulic branch, which comprises at least one hydraulic primary circuit and at least one hydraulic secondary circuit, wherein
the hydraulic primary circuit includes at least one main valve (6) for the hydraulic control of the steering mechanism during normal operation,
the hydraulic secondary circuit includes at least one emergency valve (4) for
the hydraulic control of the steering mechanism during emergency operation, the emergency valve is smaller than the main valve,
**characterized in that**
a normal open valve is provided, which is arranged in such a way that it is switched to be electroless during emergency operation and supplies the emergency valve with control pressure and closes one or multiple shut-off valves, which are located between the main valve and the steering mechanism.

2. Electrohydraulic steering system according to claim 1, **characterized in that** the control system includes at least one electric branch, which includes at least one electric primary circuit and at least one electric secondary circuit, wherein at least one vehicle main computer is provided, which controls the electric primary circuit, and wherein at least two output stages are provided, which control the electrical secondary circuit, and which are not controlled via the vehicle main computer, but rather, advantageously, directly via the steering mechanism of the steering system.

3. Electrohydraulic steering system according of one of the preceding claims,
**characterized in that** the electric secondary circuit has at least two proportional output stages, the advantageously pulse-width modulated signals of which are directly controlled via the steering mechanism, wherein it is preferably provided that the electronics outputs, via output stages, proportional to a deflection, in the form of pulse-width modulated signal outputs, in order to control the proportional pressure-reduction valves of the emergency valve, or to electrically directly actuate said emergency valve.

4. Electrohydraulic steering system according to one of the preceding claims,
**characterized in that** the emergency valve is provided with a length position feedback and/or sits in the hydraulic secondary circuit of the steering mechanism, and can either be electro-hydraulically pilot-controlled, or electrically directly actuated.

5. Electrohydraulic steering system according to one of the preceding claims,
**characterized in that** at least one main steering pump and/or at least one emergency pump are provided, which serve for the hydraulic supplying of the hydraulic primary circuit and/or of the hydraulic secondary circuit, wherein it is preferably provided that the control pressure for primary and secondary circuit is provided via at least one pressure reduction valve, which can be fed via main and/or emergency pump.

6. Electrohydraulic steering system according to one of the preceding claims,
**characterized in that** the at least one hydraulic storage means is provided in the pilot control circuit of the hydraulic primary or secondary circuit, wherein it is preferably provided that the hydraulic storage means is arranged in such a way that it is filled before the starting of the motor, preferably of the diesel motor, of the mobile working machine, by means of an emergency steering pump.

7. Electrohydraulic steering system according to one of the preceding claims,
**characterized in that**, in the hydraulic primary circuit and/or in the hydraulic secondary circuit, at least one shock valve is provided, which opens in the exceeding of a certain threshold value for the pressure of the hydraulic fluid in a line of the respective circuit, in order to be able to reduce pressure surges in the affected line, wherein it is preferably provided that the shock valve is arranged between main or emergency valve and steering mechanism, further preferably near the steering mechanism.

8. Electrohydraulic steering system according to one of the preceding claims,
**characterized in that** the steering system comprises at least one electric steering mechanism, which can be embodied as a steering wheel or joystick, and via which the electrohydraulic steering mechanism is actuated, and which takes on the function of a secondary control device for the controlling of the emergency valve.

9. Electrohydraulic steering system according to one of the preceding claims,
**characterized in that** the steering system comprises at least one electrical circuit, which permits the voltage supply for the controlling of the emergency valve only by a release signal of the vehicle main computer, in order to shift the emergency valve into a standby mode.

10. Electrohydraulic steering system according to one of the preceding claims,
**characterized in that** at least one electric circuit is provided, which detects the position of the arm-rest of the mobile working machine, on which the electric steering mechanism is mounted, and only then enables the supplying of the output stage of the pulse-width modulated power outputs when the arm-rest is in functional position.

11. Electrohydraulic steering system according to claim 10, **characterized in that** at least one electric circuit is provided, which also enables the supplying of the output stage of the pulse-width modulated power outputs when the arm-rest is not in functional position, **in that** this is controlled via a vehicle main computer and a relay circuit, in order to be able to execute a function test of the controlled valve.

12. Mobile working machine, in particular wheel loader, comprising at least one electrohydraulic steering system according to one of claims 1 to 11.

## Revendications

1. Système de direction électrohydraulique, notamment pour des machines de travail mobiles, notamment des chargeuses sur roues, comprenant au moins une commande qui comprend au moins un branchement hydraulique, lequel présente au moins un circuit primaire hydraulique et au moins un circuit secondaire hydraulique,
le circuit primaire hydraulique comprenant au moins une vanne principale (6) pour la commande hydraulique de l'installation de direction en fonctionnement normal,
le circuit secondaire hydraulique comprenant au moins une vanne de secours (4) pour la commande hydraulique de l'installation de direction en fonctionnement de secours,
la vanne de secours étant réalisée de manière plus petite que la vanne principale, **caractérisé en ce qu'**une vanne (2) ouverte sans courant est ménagée, laquelle est disposée de manière à ce qu'elle soit commutée sans courant en fonctionnement de secours et qu'elle alimente la vanne de secours en pression de commande et ferme une ou plusieurs soupapes d'arrêt qui se trouvent entre la vanne principale et l'installation de direction.

2. Système de direction électrohydraulique selon la revendication 1, **caractérisé en ce que** la commande comprend au moins un branchement électrique qui comprend au moins un circuit primaire électrique et au moins un circuit secondaire électrique, au moins un ordinateur pilote de véhicule étant ménagé, lequel commande le circuit primaire électrique, et au moins deux amplificateurs de puissance étant ménagés, lesquels commandent le circuit secondaire électrique et ne sont pas commandés par l'ordinateur pilote de véhicule mais de préférence directement par le dispositif de direction du système de direction.

3. Système de direction électrohydraulique selon l'une quelconque des revendications précédentes, **caractérisé en ce que** le circuit secondaire électrique dispose d'au moins deux amplificateurs de puissance proportionnels, dont les signaux, de préférence à modulation d'impulsions en largeur, sont directement commandés par le dispositif de direction, dans lequel système il est ménagé que l'électronique émette par l'intermédiaire d'amplificateurs de puissance proportionnellement à une déviation sous forme de sorties de puissance à modulation d'impulsions en largeur, afin de commander les vannes proportionnelles de réduction de pression de la vanne de secours ou d'actionner celle-ci directement de manière électrique.

4. Système de direction électrohydraulique selon l'une quelconque des revendications précédentes, **caractérisé en ce que** la vanne de secours est réalisée avec retour d'information de position et/ou est placée dans le circuit secondaire hydraulique de l'installation de direction et peut être soit précommandée de manière électrohydraulique soit actionnée directement de manière électrique.

5. Système de direction électrohydraulique selon l'une quelconque des revendications précédentes, **caractérisé en ce qu'**au moins une pompe principale de direction et/ou au moins une pompe de direction de secours sont ménagées, lesquelles servent à l'alimentation hydraulique du circuit primaire hydraulique et/ou du circuit secondaire hydraulique, dans lequel système il est de préférence ménagé que la pression de commande pour le circuit primaire et le circuit secondaire soit alimentée par l'intermédiaire d'au moins une soupape de réduction de pression, laquelle peut être alimentée au moyen de la pompe de direction principale et/ou de la pompe de direction de secours.

6. Système de direction électrohydraulique selon l'une quelconque des revendications précédentes, **caractérisé en ce qu'**au moins un accumulateur hydraulique est ménagé dans le circuit de précommande du circuit primaire hydraulique ou du circuit secondaire hydraulique, dans lequel système il est de préférence ménagé que l'accumulateur hydraulique soit disposé de manière à ce qu'avant le démarrage du moteur, de préférence du moteur Diesel, de la machine de travail mobile, il soit rempli au moyen d'une pompe de direction de secours électrique.

7. Système de direction électrohydraulique selon l'une quelconque des revendications précédentes, **caractérisé en ce qu'**au moins une vanne à chocs est ménagée dans le circuit primaire hydraulique et/ou dans le circuit secondaire hydraulique, laquelle s'ouvre en cas de dépassement d'une certaine valeur seuil de la pression du liquide hydraulique dans une conduite du circuit respectif afin de pouvoir éliminer des poussées de pression dans la conduite concernée, dans lequel système il est de préférence ménagé que la vanne à chocs soit disposée entre la vanne principale et la vanne de secours, en outre de préférence de manière proche de l'installation de direction.

8. Système de direction électrohydraulique selon l'une quelconque des revendications précédentes, **caractérisé en ce que** le système de direction présente au moins un dispositif de direction électrique qui peut être réalisé comme volant de direction ou joystick et par l'intermédiaire duquel l'installation de direction électrohydraulique est actionnée, et qui assume la fonction d'un appareil de commande secondaire pour la commande de la vanne de secours.

9. Système de direction électrohydraulique selon l'une quelconque des revendications précédentes, **caractérisé en ce que** le système de direction présente au moins un circuit électrique qui permet l'alimentation en tension pour la commande de la vanne de secours seulement au moyen d'un signal de libération de l'ordinateur pilote de véhicule afin de mettre la vanne de secours dans un mode de disponibilité.

10. Système de direction électrohydraulique selon l'une quelconque des revendications précédentes, **caractérisé en ce qu'**au moins un circuit électrique est ménagé, lequel saisit la position du bras de la machine de travail mobile, sur lequel le dispositif de direction électrique est monté, et ne permet l'alimentation de l'amplificateur de puissance des sorties de puissance à modulation d'impulsions en largeur que lorsque le bras se trouve en position de fonctionnement.

11. Système de direction électrohydraulique selon la revendication 10, **caractérisé en ce qu'**au moins un circuit électrique est ménagé, lequel permet l'alimentation de l'amplificateur de puissance des sorties de puissance à modulation d'impulsions en largeur même lorsque le bras ne se trouve pas en position de fonctionnement, du fait que celui-ci est commandé par l'ordinateur pilote de véhicule et par un circuit de relais afin de pouvoir réaliser un test de fonctionnement de la vanne commandée.

12. Machine de travail, notamment chargeuse sur roues, comprenant au moins un système de direction électrohydraulique selon l'une quelconque des revendications 1 à 11.
